# EUROPÄISCHE PATENTSCHRIFT

(11) **EP 3 361 126 B1**
(45) Veröffentlichungstag und Bekanntmachung des Hinweises auf die Patenterteilung: **04.03.2020**
(21) Anmeldenummer: 18151197.3
(22) Anmeldetag: 11.01.2018
(51) Int. Cl.: F16H 57/04

(54) **FLUIDVERSORGUNGSEINRICHTUNG FÜR EINEN KRAFTFAHRZEUG-ANTRIEBSSTRANG SOWIE GETRIEBE/KUPPLUNGSANORDNUNG**
FLUID SUPPLY DEVICE FOR A MOTOR VEHICLE DRIVE TRAIN AND TRANSMISSION/CLUTCH ASSEMBLY
DISPOSITIF D'ALIMENTATION EN FLUIDE POUR UNE CHAÎNE CINÉMATIQUE D'UN VÉHICULE AUTOMOBILE AINSI QUE DISPOSITIF D'ENTRAÎNEMENT/D'ACCOUPLEMENT

(30) Priorität: 09.02.2017 DE 102017102518
(43) Veröffentlichungstag der Anmeldung: 15.08.2018
(73) Patentinhaber: Magna PT B.V. & Co. KG, 74199 Untergruppenbach (DE)
(72) Erfinder: Anzt, Christian, 71720 Oberstenfeld (DE); Gerhardt, Nico, 71691 Freiberg am Neckar (DE); Faix, Gerrit, 71672 Marbach am Neckar (DE)
(74) Vertreter: Rausch, Gabriele

(56) Entgegenhaltungen:
- EP-A2- 2 977 089
- WO-A2-01/63100
- DE-A1-102016 108 518
- US-A1- 2006 219 620

## Beschreibung

Die vorliegende Erfindung betrifft eine Fluidversorgungseinrichtung für eine mobile hydraulische Anwendung, insbesondere für einen Antriebsstrang eines Kraftfahrzeuges, mit einem Fluidsumpf, in dem ein Hydraulikfluid aufgenommen ist, mit einer Fluidfiltereinrichtung, die ein Fluidfiltergehäuse mit wenigstens einer Ansaugöffnung und mit wenigstens einer Auslassöffnung aufweist, wobei an dem Fluidfiltergehäuse ein Fluidfilter angeordnet ist, der zwischen der Ansaugöffnung und der Auslassöffnung angeordnet ist, wobei der Fluidsumpf ein minimales statisches Fluidniveau definiert, wobei die Ansaugöffnung unterhalb des minimalen statischen Fluidniveaus angeordnet ist.

Ferner betrifft die vorliegende Erfindung eine Getriebe/Kupplungsanordnung, mit einem Gehäuse, innerhalb dessen eine derartige Fluidversorgungseinrichtung angeordnet ist.

Auf dem Gebiet der Antriebsstränge für Kraftfahrzeuge ist es bekannt, Fluidversorgungseinrichtungen zur Versorgung einer Mehrzahl von hydraulischen Verbrauchern zu nutzen. Die hydraulischen Verbraucher können beispielsweise Lager und/oder Zahnräder sein, insbesondere bei einer sogenannten Einspritzschmierung. Bei modernen Antriebssträngen werden Reibkupplungen und Schaltkupplungen häufig automatisiert betätigt. In diesem Fall kann eine Fluidversorgungseinrichtung auch dazu dienen, derartige Antriebsstrangkomponenten zu betätigen. Bei Reibkupplungen, die als nasslaufende Lamellenkupplungen ausgebildet sind, kann eine solche Fluidversorgungseinrichtung auch dazu dienen, die Reibkupplung im Betrieb zu kühlen bzw. zu schmieren.

Das Fluid, das zu dem oben genannten Zweck verwendet wird, ist häufig ein Hydrauliköl.

Zur Bereitstellung eines Hydraulikfluid-Volumenstroms und/oder -druckes ist es bekannt, Fluidpumpen zu verwenden. Eine Saugseite einer derartigen Pumpe ist in der Regel mit einem Fluidsumpf verbunden und saugt Hydraulikfluid aus dem Fluidsumpf an. Eine Druckseite der Pumpe ist in vielen Fällen mit einem Leitungsdruck-Ventil verbunden, mittels dessen ein konstanter Leitungsdruck erzeugt wird. Aus dem Leitungsdruck können dann unterschiedliche Anwendungsdrücke, beispielsweise zum Betätigen einer Reibkupplung, abgeleitet werden.

Der Antrieb einer solchen Pumpe kann beispielsweise in Form eines Nebenabtriebes bei Verbrennungsmotoren erfolgen.

Moderne Fluidversorgungseinrichtungen können jedoch auch Pumpen aufweisen, die mittels eines Elektromotors gesteuert bzw. geregelt angetrieben werden. Eine Druckseite einer solchen Pumpe ist dann häufig mit einem Drucksensor verbunden. Auf diese Weise kann ein Druck und/oder ein Volumenstrom auf der Druckseite der Pumpe mittels der Drehzahl des Elektromotors eingestellt, vorzugsweise geregelt werden, sodass ein proportional arbeitendes Druckregelventil nicht notwendig ist.

Derartige Fluidversorgungseinrichtungen, die eine Pumpe aufweisen, deren Druckanschluss direkt, das heißt ohne Zwischenschaltung eines Proportionalventils oder eines sonstigen Regelventils, mit einem hydraulischen Verbraucher verbunden ist, können vergleichsweise kostengünstig realisiert werden. Da keine Proportionalventile verwendet werden, kann die Montage relativ kostengünstig erfolgen, da Proportionalventile in der Regel nur bei erhöhten Reinheitsanforderungen in der Montageumgebung montierbar sind.

Um zu vermeiden, dass die Pumpe aus dem Fluidsumpf Verunreinigungen ansaugt, ist die Saugseite der Pumpe in der Regel über eine Fluidfiltereinrichtung mit dem Fluidsumpf verbunden.

Wie es aus dem Dokument DE 10 2014 110 325 A1 bekannt geworden ist, ist die Hauptströmungsrichtung in einem Filtergehäuse einer solchen Fluidfiltereinrichtung in der Regel von unten nach oben gerichtet, also gegen die Gravitation (bei bestimmungsgemäßem Gebrauch des Kraftfahrzeugantriebsstranges bzw. der Fluidfiltereinrichtung).

In manchen Betriebszuständen eines solchen Kraftfahrzeugantriebsstranges kann es vorkommen, dass das Fluid in dem Fluidsumpf stark mit Luft oder anderen Gasen verschäumt ist. Insbesondere dann, wenn das Fluid mit relativ geringen Strömungsgeschwindigkeiten durch das Fluidfilter bzw. Fildermedium der Fluidfiltereinrichtung hindurch gefördert wird, besteht die Möglichkeit, dass sich unterhalb des Fluidfilters Luft oder ein anderes Gas aus dem Fluid abscheidet. Unterhalb des Filters können sich dann größere Blasen agglomerieren. Geringe Strömungsgeschwindigkeiten können insbesondere dann vorkommen, wenn eine Pumpe einer Fluidversorgungseinrichtung rein bedarfsorientiert angetrieben wird, also beispielsweise mittels eines Elektromotors.

Die oben genannten Gasblasen (nachstehend auch als Luftblasen bezeichnet) können bei Erreichen von bestimmten Größen aufgrund der Auftriebskraft das Fluidfilter durchdringen und schlagartig in eine ansaugende Pumpe gelangen. Dies kann dazu führen, dass der Hydraulikdruck auf der Druckseite der Pumpe stark beeinträchtigt wird. Dies kann die Regelbarkeit eines solchen Druckes nachteilig beeinflussen, insbesondere dann, wenn die Pumpe als Pumpenaktuator verwendet wird, wie oben beschrieben, bei der ein hydraulischer Verbraucher direkt an die Druckseite der Pumpe angeschlossen ist.

Zur Lösung des obigen Problems wird in dem Dokument DE 10 2014 110 325 A1 vorgeschlagen, in Fluidströmungsrichtung vor dem Fluidfilter eine Lochplatte anzuordnen, wobei die Größe von wenigstens einem Teil der Löcher dazu angepasst ist, dass Fluid mit einer erhöhten Strömungsgeschwindigkeit auf das Filtermedium auftrifft. Hierdurch kann das Agglomerieren von Gasblasen an der Unterseite des Fluidfilters verhindert oder verringert werden.

Ferner ist es aus dem Dokument EP 2 133 130 A1 bekannt, in einer solchen Fluidfiltereinrichtung ein Filtermedium vorzusehen, das eine erste und eine zweite Filtrationslage aufweist, wobei zwischen den Filtrationslagen Zwischenkammern angeordnet sind, um die Filtrationslagen voneinander zu beabstanden.

Ferner offenbart das Dokument DE 10 2011 117 163 A1, eine Lochplatte unterhalb eines wellenförmigen Filtermediums anzuordnen.

Das Dokument DE 102 96 703 T5 offenbart ein weiteres Filtermedium eines Ölfilters für ein Automatik-Getriebe, bei dem eine Faserschicht hitzebeständige Fasern enthält.

Schließlich offenbart das Dokument DE 10 2007 005 399 A1 einen Saugfilter für Öl eines Getriebes und/oder eines Motors, wobei der Saugfilter eine Oberschale und eine Unter- schale aufweist, die miteinander verbunden sind und einen Hohlraum bilden, innerhalb dessen ein Filtermedium angeordnet ist. Die Oberschale weist ein mit dem Ansaugbereich einer Pumpe in Verbindung stehendes Ansaugrohr bzw. eine Ansaugöffnung auf. Die Ansaugung von Öl aus dem Ölsumpf erfolgt über zumindest eine ölsumpfseitige Ansaugöffnung in der Oberschale des Saugfilters. Das mit dem Saugbereich der Pumpe in Verbindung stehende Ansaugrohr wird durch ein Filtermedium hindurchgeführt, und seitlich zum Filtermedium und zur Oberschale hin abgedichtet. Die Unterschale des Saugfilters ist vorzugsweise durch einen Ölwannenboden des Fluidsumpfes gebildet.

Aus der WO 2001 63 100 A1 ist ein Ölfilter bekannt, der optimal im Bauraum der Ölwanne integriert ist. Der Ölfilter besitzt einen Ansaugstutzen und ein Filtermaterial, das das angesaugte Öl vom abgelassenen Öl trennt.

Ein solcher Ölfilter ist auch aus der US 2006 0 219 620 A1 sowie aus der DE 102016108518 A1 bekannt.

Vor diesem Hintergrund ist es eine Aufgabe der Erfindung, eine verbesserte Fluidversorgungseinrichtung sowie eine verbesserte Getriebe/Kupplungsanordnung anzugeben.

Die obige Aufgabe wird bei der eingangs genannten Fluidversorgungseinrichtung mit den Merkmalen des Anspruchs 1 gelösst.

Ferner wird die obige Aufgabe gelöst durch eine Getriebe/Kupplungsanordnung mit einem Gehäuse, innerhalb dessen eine Fluidversorgungseinrichtung der erfindungsgemäßen Art angeordnet ist.

Mit der erfindungsgemäßen Fluidversorgungseinrichtung kann das Problem vermieden werden, dass sich Luftagglomerationen unterhalb des Fluidfilters bilden und das Fluidfilter schlagartig durchdringen. Mit anderen Worten können Druckschwankungen auf der Druckseite einer Hydraulikpumpe vermieden werden, die an die Auslassöffnung des Fluidfiltergehäuses angeschlossen ist.

Durch die erfindungsgemäße Fluidversorgungseinrichtung kann erreicht werden, dass Luft an dem Fluidfilter abgeschieden wird und nicht auf die Auslassseite des Fluidfilters gelangt. Die Auftriebskraft von etwaigen Gasblasen an der Oberseite des Fluidfilters wirkt der Strömungsrichtung entgegen, und damit einem Eindringen auf die Auslassseite des Fluidfilters entgegen.

Es ergibt sich eine Erhöhung der Robustheit der Fluidversorgungseinrichtung. Gegebenenfalls kann die Regelbarkeit der Fluidversorgungseinrichtung verbessert werden. Ferner ist es gegebenenfalls möglich, eine Alterung des Hydraulikfluids zu verringern. In manchen Fällen kann es gegebenenfalls möglich sein, die Lebensdauer von Drucksensoren zu verbessern, da Druckspitzen vorzugsweise verhindert werden können.

Die Fluidversorgungseinrichtung weist vorzugsweise eine Hydraulikpumpe auf, deren Sauganschluss mit der Auslassöffnung des Fluidfiltergehäuses verbunden ist. Die Hydraulikpumpe ist vorzugsweise mittels eines elektrischen Motors angetrieben. Ein Druckanschluss der Hydraulikpumpe ist vorzugsweise direkt mit einem hydraulischen Verbraucher verbindbar bzw. verbunden. Ein Druck in der Leitung von dem Druckanschluss der Hydraulikpumpe zu dem Hydraulikverbraucher kann vorzugsweise gemessen werden. In dieser Ausgestaltung kann ein Hydraulikdruck auf der Druckseite der Hydraulikpumpe durch Einstellen der Drehzahl des Elektromotors geregelt werden, der die Hydraulikpumpe antreibt.

Der Hydraulikverbraucher ist vorzugsweise ein Aktuator zum Betätigen einer Reibkupplung eines Antriebsstranges, insbesondere einer Reibkupplung, die zwischen einem Antriebsmotor und einer Getriebeanordnung des Antriebsstranges angeordnet ist und als Anfahr- und/oder Trennkupplung dient. Die Reibkupplung ist vorzugsweise eine nasslaufende Lamellenkupplung.

Besonders bevorzugt weist der Antriebsstrang des Kraftfahrzeuges ein Doppelkupplungsgetriebe auf, das zwei Reibkupplungen der oben beschriebenen Art beinhaltet.

Ein Durchströmen von oben nach unten ist gleichzusetzen mit einem Durchströmen des Fluidfilters bzw. des Filtermediums entgegen der Gravitation. Die Durchströmungsrichtung kann dabei schräg zu der Gravitationsrichtung verlaufen, verläuft jedoch vorzugsweise nicht senkrecht zu der Gravitationsrichtung.

Das minimale statische Fluidniveau, das durch den Fluidsumpf definiert ist, ist ein Fluidniveau innerhalb des Fluidsumpfes, das in ordnungsgemäßem statischem Betriebszustand der Fluidversorgungseinrichtung nicht unterschritten wird. Mit anderen Worten handelt es sich hierbei um jenes Fluidniveau, das sich in dem Fluidsumpf einstellt, wenn das Fahrzeug steht, insbesondere nicht an einer Steigung.

Da das Hydraulikfluid in dem Fluidsumpf nicht verbraucht wird, da es in einem geschlossenen Kreislauf verwendet wird (innerhalb eines Kupplungsgehäuses beispielsweise und/oder innerhalb eines Getriebegehäuses), ist das minimale statische Fluidniveau in der Regel jenes Niveau, das vorhanden ist, wenn das Kraftfahrzeug steht.

Die Ansaugöffnung ist in jedem Fall unterhalb dieses minimalen statischen Fluidniveaus angeordnet. Hierdurch kann im statischen Betriebszustand erreicht werden, dass ein Ansaugen von Luft über die Ansaugöffnung vermieden wird. Unter einem Ansaugen von Luft wird hierbei insbesondere verstanden, dass Luft direkt über die Ansaugöffnung angesaugt wird. Dies könnte dann der Fall sein, wenn die Ansaugöffnung sich oberhalb des minimalen statischen Fluidniveaus befinden würde. Unter einem Ansaugen von Luft wird vorzugsweise jedoch nicht verstanden, dass Gas- oder Luftblasen, die innerhalb des Hydraulikfluides vorhanden sind (aufgrund eines Aufschäumens während des Betriebes), über den Fluidfilter angesaugt werden. Derartige Gasblasen werden vielmehr über das Fluidfilter vorzugsweise an einem Eindringen in Saugrichtung abgehalten. Ein Ansammeln von größeren Luftblasen (Agglomerationen von Luftblasen) bei geringen Strömungsgeschwindigkeiten wird dabei in der Regel verhindert, da gerade bei geringen Strömungsgeschwindigkeiten die Luftblasen entgegen der Gravitation tendenziell noch oben steigen, also von dem Fluidfilter weg.

Das Fluidfilter bzw. das Filtermedium kann ein Sieb sein, kann ein Flies sein, ein Gewebe, ein Papier etc.

Die Aufgabe wird somit vollkommen gelöst.

Die minimale dynamische Fluidniveau-Topografie ergibt sich dadurch, dass sich das Hydraulikfluid des Fluidsumpfes im dynamischen Betrieb, also insbesondere während des Fahrens des Kraftfahrzeuges, bewegt. Bei Beschleunigungen schwappt das Hydraulikfluid aufgrund der Trägheit in die der Beschleunigung entgegengesetzte Richtung. Die Beschleunigung kann ein Bremsen des Kraftfahrzeuges sein, kann jedoch auch ein Beschleunigen des Kraftfahrzeuges sein. Ferner kann das Hydraulikfluid auch in seitlicher Richtung schwappen, beispielsweise bei Kurvenfahrten. Vorzugsweise berücksichtigt die minimale dynamische Fluidniveau-Topografie auch unterschiedliche Fluidniveaus, wenn das Fahrzeug schräg oder an einer Steigung abgestellt wird.

Die jeweiligen maximalen Beschleunigungen in Längsrichtung und/oder in Querrichtung führen zu jeweiligen maximalen Verschiebungen der Oberfläche des Hydraulikfluides innerhalb des Fluidsumpfes. Diese Oberflächen sind dabei in der Regel gegenüber der Horizontalen geneigt. Die minimale dynamische Fluidniveau-Topografie ergibt sich durch den in Gravitationsrichtung jeweils niedrigsten Punkt sämtlicher Einzeltopografien aufgrund verschiedener Beschleunigungen, und zwar gesehen über die gesamte Fläche des Fluidsumpfes. In der Regel liegt ein höchster Punkt der minimalen dynamischen Fluidniveau-Topografie etwa in der Mitte des Fluidsumpfes, gesehen in der Draufsicht in Gravitationsrichtung. Zum Rand hin fällt die minimale dynamische Fluidniveau-Topografie in der Regel ab, und zwar insbesondere in Richtung nach vorne und in Richtung nach hinten, sowie in der Regel auch in Richtung zu den Seiten.

Durch die Maßnahme, die Ansaugöffnung und/oder die Auslassöffnung unterhalb der minimalen dynamischen Fluidniveau-Topografie anzuordnen, kann erreicht werden, dass insbesondere die Auslassöffnung immer so angeordnet ist, dass ein Ansaugen von Luft verhindert werden kann.

Die Ansaugöffnung kann durch eine Oberseite des Gehäuses gebildet sein.

In einer bevorzugten Ausführungsform ist wenigstens ein Teil der Ansaugöffnung durch eine Oberseite des Fluidfilters gebildet.

Hierbei bildet das Fluidfilter, also das Filtermedium selbst die Ansaugöffnung.

Die Fluidfiltereinrichtung kann auf diese Weise konstruktiv einfach realisiert werden.

Auf diese Weise kann erreicht werden, dass ein Ansaugen von Luft über die Auslassöffnung in allen Betriebszuständen verhindert werden kann.

Gemäß einer weiteren insgesamt bevorzugten Ausführungsform ist das Fluidfilter so geformt, dass dessen Oberseite unterhalb der minimalen dynamischen Fluidniveau-Topografie angeordnet ist.

Das Fluidfilter kann dabei insbesondere wenigstens eine Schräge mit einem Winkel zur Horizontalen von größer Null und mit einem Winkel zur Vertikalen von größer als Null aufweisen.

Die Form des Fluidfilters kann insbesondere an die Form der minimalen dynamischen Fluidniveau-Topografie angepasst sein.

Gemäß einer weiteren bevorzugten Ausführungsform weist das Fluidfiltergehäuse eine Oberseite auf, innerhalb der die Ansaugöffnung ausgebildet ist und die oberhalb des Fluidfilters angeordnet ist, wobei die Oberseite des Fluidfiltergehäuses so geformt ist, dass die Ansaugöffnung unterhalb der minimalen dynamischen Fluidniveau-Topografie angeordnet ist.

Bei dieser Ausführungsform ist die Ansaugöffnung durch einen Gehäuseabschnitt des Fluidfiltergehäuses gebildet. Das Fluidfilter selbst ist innerhalb des Fluidfiltergehäuses unterhalb der Ansaugöffnung angeordnet. Die Ausgestaltung der Oberseite und insbesondere die Anordnung der Ansaugöffnung sind so geformt bzw. gewählt, dass die Ansaugöffnung in allen Betriebszuständen unterhalb der minimalen dynamischen Fluid- niveau-Topografie angeordnet ist. Hierbei kann die Oberseite des Fluidfiltergehäuses insbesondere wenigstens eine Schräge mit einem Winkel zur Horizontalen von größer als Null und mit einem Winkel zur Vertikalen von größer als Null aufweisen. Insbesondere kann die Oberseite des Fluidfiltergehäuses an die minimale dynamische Fluidniveau-Topografie angepasst sein. Eine Anpassung an die minimale dynamische Fluidniveau-Topografie kann beinhalten, dass der betreffende Gehäuseabschnitt der Oberseite des Fluidfiltergehäuses parallel unterhalb der minimalen dynamischen Fluidniveau-Topografie verläuft.

Insgesamt ist es ferner vorteilhaft, wenn ein mit der Auslassöffnung verbundener Anschluss des Fluidfiltergehäuses unterhalb des Fluidfilters angeordnet ist.

Auf diese Weise ist es nicht notwendig, dass ein Anschlussstutzen sich durch das Fluidfilter hindurch erstreckt. Der Anschluss des Fluidfiltergehäuses kann durch einen Stutzen gebildet sein.

Der Anschluss kann insbesondere seitlich an dem Fluidfiltergehäuse angeordnet sein, oder an einer Unterseite des Fluidfiltergehäuses.

Bei der erfindungsgemäßen Getriebe- und/oder Kupplungsanordnung ist es bevorzugt, wenn an dem Fluidfiltergehäuse ein Stutzen ausgebildet ist, der an die Auslassöffnung angeschlossen ist und der eine Wand des Gehäuses durchsetzt.

Auf diese Weise kann das Fluidfiltergehäuse beispielsweise in einem Kupplungsgehäuse angeordnet sein, wohingegen eine Pumpe der Fluidversorgungseinrichtung beispielsweise in einem Getriebegehäuse des Antriebsstranges angeordnet ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges für ein Kraftfahrzeug mit einer Ausführungsform einer erfindungsgemäßen Fluidversorgungseinrichtung;
- Fig. 2: eine schematische Darstellung einer alternativen Ausführungsform einer Fluidfiltereinrichtung einer erfindungsgemäßen Fluidversorgungseinrichtung;
- Fig. 3: eine schematische Darstellung einer alternativen Ausführungsform einer Fluidfiltereinrichtung einer erfindungsgemäßen Fluidversorgungseinrichtung;
- Fig. 4: eine schematische Darstellung einer alternativen Ausführungsform einer Fluidfiltereinrichtung einer erfindungsgemäßen Fluidversorgungseinrichtung;
- Fig. 5: eine schematische perspektivische Ausführungsform einer weiteren Ausführungsform einer Fluidfiltereinrichtung für eine erfindungsgemäße Fluidversorgungseinrichtung; und
- Fig. 6: eine schematische Schnittansicht durch die Fluidfiltereinrichtung der Fig. 5.

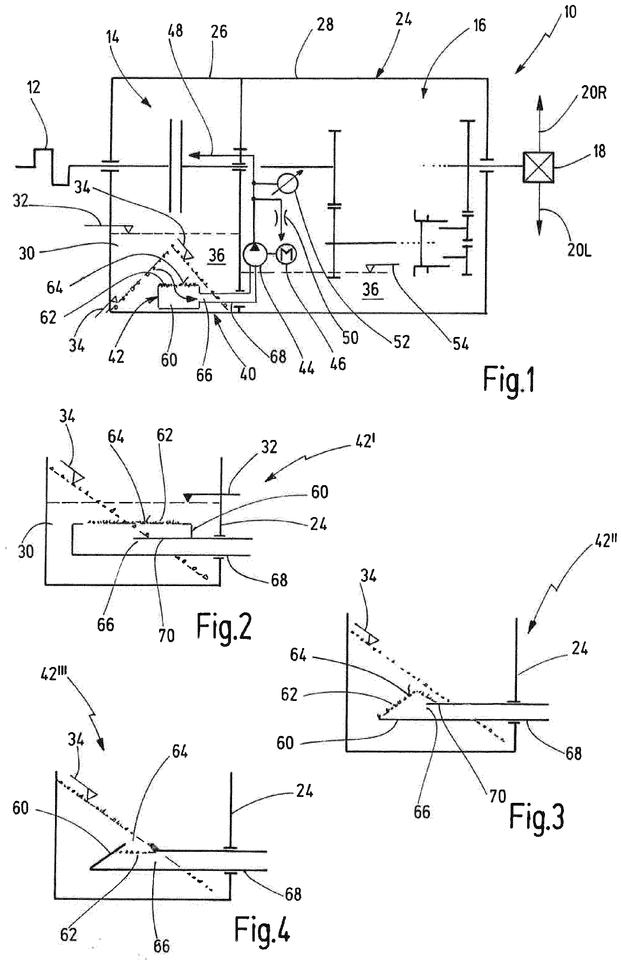

In Fig. 1 ist in schematischer Form ein Antriebsstrang 10 für ein Kraftfahrzeug dargestellt. Der Antriebsstrang 10 weist einen Antriebsmotor 12 auf, beispielsweise in Form eines Verbrennungsmotors. Ferner beinhaltet der Antriebsstrang 10 eine Kupplungsanordnung 14, die eingangsseitig mit dem Antriebsmotor 12 verbunden ist. Ein Ausgang der Kupplungsanordnung 14 ist mit einer Getriebeanordnung 16 verbunden, die in der Regel dazu ausgebildet ist, eine Mehrzahl von unterschiedlichen Gangstufen einzurichten. Ein Ausgang der Getriebeanordnung 16 ist mit einem Differential 18 verbunden, mittels dessen Antriebsleistung auf angetriebene Räder 20L, 20R verteilbar ist.

Die Kupplungsanordnung 14 kann eine Einfachkupplung sein, kann jedoch auch eine Doppelkupplung sein. Die Getriebeanordnung 16 kann ein einfaches Getriebe sein, kann jedoch auch aus zwei Teilgetrieben bestehen, insbesondere in Form eines Doppelkupplungsgetriebes. Die Kupplungsanordnung 14 kann durch eine trockene Kupplung gebildet sein oder durch eine nasslaufende Lamellenkupplung. Die Getriebeanordnung 16 ist insbesondere in Form eines Stirnradgetriebes in Vorgelegebauweise realisiert.

Der Antriebsstrang 10 kann für den Front- oder für den Quereinbau in einem Kraftfahrzeug ausgelegt sein.

Die Kupplungsanordnung 14 und die Getriebeanordnung 16 sind vorzugsweise automatisiert betätigbar, insbesondere mittels einer Hydraulikanordnung. Ferner kann die Kupplungsanordnung 14 fluidisch gekühlt und/oder geschmiert sein.

Der Antriebsstrang 10 weist ein Gehäuse 24 auf, das ein Kupplungsgehäuse 26 für die Kupplungsanordnung 14 sowie ein Getriebegehäuse 28 für die Getriebeanordnung 16 beinhaltet.

In dem Kupplungsgehäuse 26 ist ein Fluidsumpf 30 angeordnet, der ein minimales statisches Fluidniveau 32 definiert, sowie eine minimale dynamische Fluidniveau- Topografie 34. Wie es in Fig. 1 dargestellt ist, ist das minimale statische Fluidniveau 32 generell horizontal ausgerichtet, insbesondere senkrecht zu einer Gravitationsrichtung. Die minimale dynamische Fluidniveau-Topografie 34 ist nach der Art eines Gebirges ausgebildet, mit einem relativ hohen Abschnitt zentral in der Mitte und tiefer liegenden Abschnitten zu einem vorderen und/oder zu einem hinteren Ende des Gehäuses 24 und/oder hin zu Seiten des Kupplungsgehäuses 26.

Der Fluidsumpf 30 ist mit einem Hydraulikfluid 36 gefüllt bzw. hierdurch gebildet, insbesondere durch ein Hydrauliköl.

Der Antriebsstrang 10 weist ferner eine Fluidversorgungseinrichtung 40 auf. Die Fluidversorgungseinrichtung 40 kann Teil einer Hydraulikanordnung sein, die dazu dient, die Getriebeanordnung 16 und/oder die Kupplungsanordnung 14 mittels geeigneter hydraulischer Aktuatoren zu betätigen. Ferner kann die Fluidversorgungseinrichtung 40 dazu ausgebildet sein, Schmier- und/oder Kühlfluid bereitzustellen.

Die Fluidversorgungseinrichtung 40 weist eine Fluidfiltereinrichtung 42 auf. Die Fluidfiltereinrichtung 42 ist dem Fluidsumpf 30 zugeordnet und ist zumindest abschnittsweise innerhalb des Fluidsumpfes 30 angeordnet.

Die Fluidversorgungseinrichtung 40 weist ferner eine Hydraulikpumpe 44 auf, deren Sauganschluss bzw. Saugseite mit der Fluidfiltereinrichtung 42 verbunden ist. Die Hydraulikpumpe 44 ist mittels eines elektrischen Motors 46 antreibbar. Eine Druckseite bzw. ein Druckanschluss der Hydraulikpumpe 44 ist mit wenigstens einem hydraulischen Verbraucher 48 verbunden. Vorliegend ist schematisch angedeutet, dass einem zentralen Abschnitt bzw. Nabenabschnitt der Kupplungsanordnung 40 Hydraulikfluid zugeführt wird, und zwar zum Zwecke des Schmierens und/oder Kühlens der Kupplungsanordnung 14 im Betrieb. Der hydraulische Verbraucher 48 kann jedoch auch ein Aktuator sein, um die Kupplungsanordnung 14 zu betätigen, und/oder ein Aktuator, um eine Schaltkupplung der Getriebeanordnung 16 zu betätigen, oder dergleichen.

Ein nicht näher bezeichneter Druckanschluss der Hydraulikpumpe 44 ist dabei direkt mit dem hydraulischen Verbraucher 48 verbunden, das heißt ohne Zwischenschaltung von Proportionalventilen oder dergleichen. Der Druckanschluss der Hydraulikpumpe 44 ist über eine Blende 50 mit einem Niederdruckbereich verbunden. Hierdurch kann im Falle der Versorgung eines Aktuators die Regelbarkeit eines Druckes verbessert werden. Der Druckanschluss der Hydraulikpumpe 44 ist ferner mit einer Druckmesseinrichtung 52 verbunden. Die Druckmesseinrichtung 52 und der elektrische Motor 46 sind mit einer nicht näher gezeigten Steuereinrichtung verbunden, die dazu ausgebildet ist, den Druck an dem Druckanschluss der Hydraulikpumpe 44 durch Einstellen der Drehzahl des elektri-schen Motors 46 zu regeln.

In dem Getriebegehäuse 28 ist ein weiterer Abschnitt des Fluidsumpfes 36 dargestellt, der das gleiche Niveau haben kann wie der Fluidsumpf innerhalb des Kupplungsgehäuses 26. Vorliegend ist dargestellt, dass ein Fluidniveau 54 in dem Getriebegehäuse 28 niedriger liegt als das minimale statische Fluidniveau 32 in dem Kupplungsgehäuse 26.

Die Fluidfiltereinrichtung 42 weist ein Fluidfiltergehäuse 60 auf. An dem Fluidfiltergehäuse 60 ist ein Fluidfilter bzw. ein Filtermedium 62 angeordnet. In Fig. 1 bildet eine Oberseite des Fluidfilters 62 eine Ansaugöffnung 64 des Fluidfiltergehäuses 60. Das Fluidfiltergehäuse 60 erstreckt sich ferner unterhalb des Fluidfilters 62 und weist in dem Bereich unterhalb des Fluidfilters 62 eine Auslassöffnung 66 auf, die über eine nicht näher bezeichnete Leitung mit der Saugseite der Hydraulikpumpe 44 verbunden ist. Im vorliegenden Fall ist die Auslassöffnung 66 mit einem Stutzen 68 verbunden, der eine Gehäusewand durchsetzt, die Teil des Getriebegehäuses 28 ist. Hierdurch ist es möglich, die Auslassöffnung 66 mit der Hydraulikpumpe 44 zu verbinden, die vorzugsweise innerhalb des Getriebegehäuses 28 angeordnet ist.

Die Ansaugöffnung 64 des Fluidfiltergehäuses 60 ist vorliegend so ausgebildet und so angeordnet, und zwar aufgrund der Positionierung des Fluidfiltergehäuses 60 innerhalb des Fluidsumpfes 30, dass die Ansaugöffnung 64 generell unterhalb (in Gravitationsrichtung gesehen) des minimalen statischen Fluidniveaus 32 liegt und ferner unterhalb der minimalen dynamischen Fluidniveau-Topografie 34. Hierdurch kann sicher gewährleistet werden, dass ein Ansaugen von Luft verhindert wird.

Durch die Tatsache, dass das Fluidfiltergehäuse ferner so angeordnet und so in Bezug auf den Fluidsumpf angeordnet ist, dass über die Ansaugöffnung 64 angesaugtes Hydraulikfluid 36 den Fluidfilter 62 von oben nach unten (in Gravitationsrichtung) durchströmt, kann ferner eine Agglomeration von Luftblasen auf der Ansaugseite des Fluidfilters 62 verhindert werden.

In den nachfolgenden Figuren 2 bis 6 werden weitere Ausführungsformen von Fluidfiltereinrichtungen gezeigt, die hinsichtlich Aufbau und Funktionsweise generell der Fluidfiltereinrichtung 42 der Fig. 1 entsprechen. Gleiche Elemente sind daher durch gleiche Bezugszeichen gekennzeichnet. Im Folgenden werden im Wesentlichen die Unterschiede erläutert.

In Fig. 2 ist gezeigt, dass das Fluidfiltergehäuse 60 so in dem Fluidsumpf 30 angeordnet ist, dass die Ansaugöffnung 64 (wiederum gebildet durch eine Oberseite des Fluidfilters 62) die minimale dynamische Fluidniveau-Topografie 34 schneidet. Dies wird in vielen Fällen zu der Möglichkeit führen, dass die Auslassöffnung 66 bei bestimmten dynamischen Betriebszuständen direkt mit einer Oberseite des Fluidsumpfes verbunden wird, also direkt Luft angesaugt wird.

Vorliegend ist in dem Fluidfiltergehäuse 60 unterhalb des Fluidfilters 62 eine Ansaugabschirmung 70 ausgebildet, die dafür sorgt, dass die Auslassöffnung 66 in jedem Fall unterhalb der minimalen dynamischen Fluidniveau-Topografie 34 angeordnet ist, sodass ein Ansaugen von Luft vermieden werden kann.

In Fig. 3 ist eine weitere Ausführungsform einer Fluidfiltereinrichtung 42" gezeigt. Hier ist das Fluidfilter 62 nicht horizontal wie bei den vorherigen Ausführungsformen ausgerichtet, sondern ist so geformt, dass die Oberseite des Fluidfilters 62, die die Ansaugöffnung 64 bildet, unterhalb der minimalen dynamischen Fluidniveau-Topografie 34 angeordnet ist. Dies beinhaltet vorliegend, dass das Fluidfilter 62 wenigstens einen schrägen Abschnitt beinhaltet. Auch bei der Ausführungsform der Fig. 3 ist eine Ansaugabschirmung 70 vorgesehen.

In Fig. 4 ist eine weitere Ausführungsform einer Fluidfiltereinrichtung 42"' gezeigt. Hier ist das Fluidfiltergehäuse 60 so ausgebildet, dass eine Ansaugöffnung 64 durch das Fluidfiltergehäuse 62 gebildet ist, insbesondere durch eine Oberseite hiervon. Die Oberseite des Fluidfiltergehäuses 60 ist dabei so ausgeformt, dass die Ansaugöffnung 64 in jedem Fall unterhalb der minimalen dynamischen Fluidniveau-Topografie34 angeordnet ist.

Das Fluidfilter 62 ist innerhalb des Fluidfiltergehäuses 60 unterhalb der Ansaugöffnung 64 angeordnet. Die Auslassöffnung 66 ist unterhalb des Fluidfilters 62 angeordnet.

In den Figuren 2 bis 4 ist jeweils gezeigt, dass die Auslassöffnung 66 mit einem Stutzen 68 verbunden ist, der sich gegenüber dem Fluidfiltergehäuse 60 seitlich erstreckt und durch eine Wand in dem Gehäuse 24 hindurchgeführt ist. Der Stutzen 68 könnte jedoch auch an der Unterseite des Fluidfiltergehäuses 60 ausgebildet sein. In manchen Fällen kann der Stutzen 68 auch an der Oberseite des Fluidfiltergehäuses 60 angeordnet sein, ist jedoch vorzugsweise so ausgebildet, dass er den Fluidfilter 62 nicht durchsetzen muss.

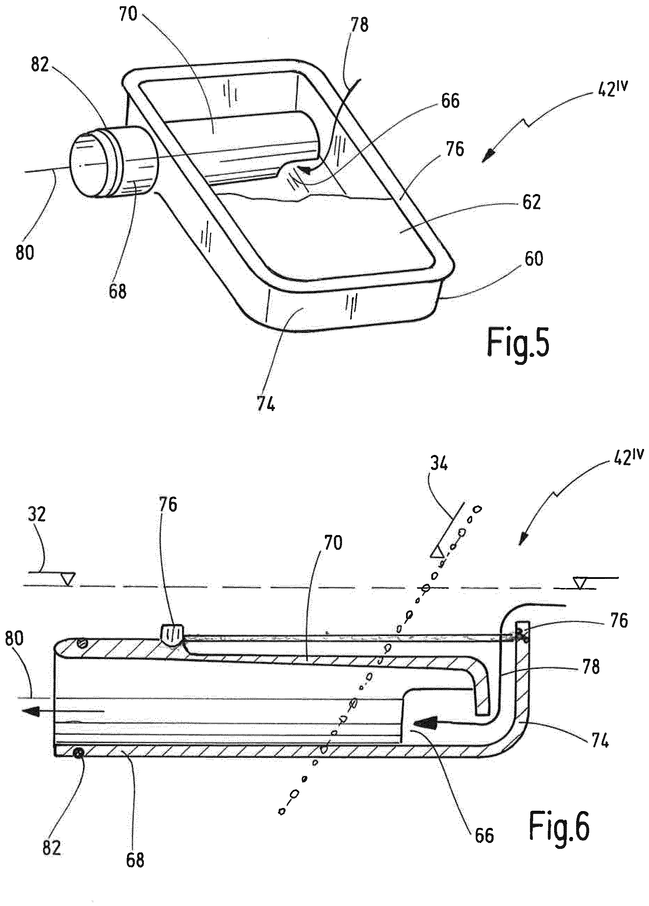

In den Figuren 5 und 6 ist eine weitere Ausführungsform einer Fluidfiltereinrichtung 42^{IV} gezeigt.

Hier ist zu sehen, dass das Fluidfiltergehäuse 60 ein wannenförmiges Unterteil 74 aufweist, auf dessen Rand ein Kragen 76 gesetzt ist, mittels dessen der Fluidfilter 62 an dem oberen Rand des Fluidfiltergehäuses 60 befestigt und abgedichtet wird.

Der Fluidfilter 62 ist in Fig. 5 schematisch als Netz dargestellt.

Ferner ist zu erkennen, dass sich ein Stutzen 68 seitlich von dem wannenförmigen Unterteil 74 erstreckt. Der Stutzen 68 verlängert sich in das Innere des wannenförmigen Unterteils 74 hinein und ist an seinem inneren Ende im unteren Bereich ausgeschnitten, derart, dass der sich innerhalb des wannenförmigen Unterteils 74 erstreckende Abschnitt des Stutzens eine Auslassöffnung 66 bildet. In Fig. 5 und 6 ist zu erkennen, wie das Hydraulikfluid aus dem Fluidsumpf 30 angesaugt wird, und zwar so, dass das angesaugte Fluid sich immer aus Bereichen speisen kann, die unterhalb der minimalen dynamischen Fluidniveau-Topografie angeordnet sind.

In Fig. 5 ist ferner zu erkennen, dass der Stutzen 68 eine Längsachse 80 definiert, wobei die Schnittansicht der Fig. 6 durch die Längsachse 80 hindurch verläuft.

In Fig. 6 ist ferner zu erkennen, dass die Oberseite des sich in dem wannenförmigen Unterteil 74 hinein erstreckenden Stutzens die Ansaugabschirmung 70 bildet, die dafür sorgt, dass die Auslassöffnung 66 immer unterhalb der minimalen dynamischen Fluidniveau-Topografie 34 angeordnet ist.

In Fig. 5 und 6 ist ferner zu erkennen, dass der sich außerhalb des wannenförmigen Unterteils 74 erstreckende Stutzen 68 an seinem Außenumfang einen 0-Ring 82 tragen kann, um für eine Abdichtung gegenüber einer daran anzuschließenden Leitung zu sorgen.

## Patentansprüche

1. Fluidversorgungseinrichtung (40) für eine mobile hydraulische Anwendung, insbesondere für einen Antriebsstrang (10) eines Kraftfahrzeuges, mit einem Fluidsumpf (30), in dem ein Hydraulikfluid (30) aufgenommen ist, mit einer Fluidfiltereinrichtung (42), die ein Fluidfiltergehäuse (60) mit wenigstens einer Ansaugöffnung (64) und mit wenigstens einer Auslassöffnung (66) aufweist, wobei an dem Fluidfiltergehäuse (60) ein Fluidfilter (62) angeordnet ist, der zwischen der Ansaugöffnung (64) und der Auslassöffnung (66) angeordnet ist, wobei der Fluidsumpf (30) ein minimales statisches Fluidniveau (32) definiert, wobei die Ansaugöffnung (64) unterhalb des minimalen statischen Fluidniveaus (32) angeordnet ist, wobei das Fluidfiltergehäuse (60) so ausgebildet und so in Bezug auf den Fluidsumpf (30) angeordnet ist, dass über die Ansaugöffnung (64) angesaugtes Hydraulikfluid (36) den Fluidfilter (62) von oben nach unten durchströmt,
**dadurch gekennzeichnet, dass**
für den Fluidsumpf (30) eine minimale dynamische Fluidniveau-Topografie (34) definiert ist, die sich durch den in Gravitationsrichtung jeweils niedrigsten Punkt sämtlicher Einzeltopografien aufgrund verschiedener Beschleunigungen bestimmt, und zwar gesehen über die gesamte Fläche des Fluidsumpfes (30), wobei das Fluidfiltergehäuse (60) so ausgebildet und so in Bezug auf den Fluidsumpf (30) angeordnet ist, dass die Ansaugöffnung (64) und/oder die Auslassöffnung (66) unterhalb der minimalen dynamischen Fluidniveau-Topografie (34) angeordnet ist und die den Teil oder die gesamte Ansaugöffnung (64) bildende Oberseite des Fluidfilters (62) die minimale dynamische Fluidniveau-Topografie (34) schneidet und wobei das Fluidfiltergehäuse (60) unterhalb des Fluidfilters (62) eine Abschirmung (70) aufweist, die so angeordnet ist, dass die Auslassöffnung (66) unterhalb der minimalen dynamischen Fluidniveau-Topografie (34) angeordnet ist.

2. Fluidversorgungseinrichtung nach Anspruch 1, **dadurch gekennzeichnet, dass** wenigstens ein Teil der Ansaugöffnung (64) durch eine Oberseite des Fluidfilters (62) gebildet ist.

3. Fluidversorgungseinrichtung nach einem der Ansprüche 1 oder 2, **dadurch gekennzeichnet, dass** der Fluidfilter (62) so geformt ist, dass dessen Oberseite unterhalb der minimalen dynamischen Fluidniveau-Topografie (34) angeordnet ist.

4. Fluidversorgungseinrichtung nach Anspruch 1, **dadurch gekennzeichnet, dass** das Fluidfiltergehäuse (60) eine Oberseite aufweist, innerhalb der die Ansaugöffnung (64) ausgebildet ist und die oberhalb des Fluidfilters (62) angeordnet ist, wobei die Oberseite des Fluidfiltergehäuses (60) so geformt ist, dass die Ansaugöffnung (64) unterhalb der minimalen dynamischen Fluidniveau-Topografie (34) angeordnet ist.

5. Fluidversorgungseinrichtung nach einem der Ansprüche 1 - 4, **dadurch gekennzeichnet, dass** ein mit der Auslassöffnung (66) verbundener Anschluss des Fluidfiltergehäuses (60), der mit einem Sauganschluss einer Hydraulikpumpe (44) verbindbar ist, unterhalb des Fluidfilters (62) angeordnet ist.

6. Getriebe/Kupplungsanordnung (14, 16) mit einem Gehäuse {24), innerhalb dessen eine Fluidversorgungseinrichtung (40) nach einem der Ansprüche 1-5 angeordnet ist.

7. Getriebe/Kupplungsanordnung nach Anspruch 6, wobei an dem Fluidfiltergehäuse (60) ein Stutzen (68) ausgebildet ist, der an die Auslassöffnung (66) angeschlossen ist und der eine Wand des Gehäuses (24) durchsetzt.

## Claims

1. Fluid supply device (40) for a mobile hydraulic application, in particular for a drive train (10) of a motor vehicle, having a fluid sump (30) in which a hydraulic fluid (30) is accommodated, having a fluid filter device (42) which has a fluid filter housing (60) with at least one intake opening (64) and with at least one outlet opening (66), wherein arranged on the fluid filter housing (60) is a fluid filter (62) which is arranged between the intake opening (64) and the outlet opening (66), wherein the fluid sump (30) defines a minimum static fluid level (32), wherein the intake opening (64) is arranged beneath the minimum static fluid level (32), wherein the fluid filter housing (60) is designed such that, and arranged with respect to the fluid sump (30) such that, hydraulic fluid (36) sucked in via the intake opening (64) flows through the fluid filter (62) from the top downwards,
**characterized in that**
a minimum dynamic fluid level topography (34) is defined for the fluid sump (30) and is determined by the in each case lowest point in the direction of gravity of all the individual topographies based on different accelerations, specifically seen over the entire surface of the fluid sump (30), wherein the fluid filter housing (60) is designed such that, and arranged with respect to the fluid sump (30) such that, the intake opening (64) and/or the outlet opening (66) are/is arranged beneath the minimum dynamic fluid level topography (34) and that upper side of the fluid filter (62) which forms part of or the entire intake opening (64) intersects the minimum dynamic fluid level topography (34), and wherein the fluid filter housing (60) has beneath the fluid filter (62) a shield (70) which is arranged such that the outlet opening (66) is arranged beneath the minimum dynamic fluid level topography (34).

2. Fluid supply device according to Claim 1, **characterized in that** at least one part of the intake opening (64) is formed by an upper side of the fluid filter (62).

3. Fluid supply device according to either of Claims 1 and 2, **characterized in that** the fluid filter (62) is shaped such that its upper side is arranged beneath the minimum dynamic fluid level topography (34).

4. Fluid supply device according to Claim 1, **characterized in that** the fluid filter housing (60) has an upper side within which the intake opening (64) is formed and which is arranged above the fluid filter (62), wherein the upper side of the fluid filter housing (60) is shaped such that the intake opening (64) is arranged beneath the minimum dynamic fluid level topography (34).

5. Fluid supply device according to one of Claims 1 to 4, **characterized in that** a connection, connected to the outlet opening (66), of the fluid filter housing (60), which connection is able to be connected to a suction connection of a hydraulic pump (44), is arranged beneath the fluid filter (62).

6. Transmission/clutch assembly (14, 16) having a housing (24) within which a fluid supply device (40) according to one of Claims 1 to 5 is arranged.

7. Transmission/clutch assembly according to Claim 6, wherein a connecting piece (68) is formed on the fluid filter housing (60) and is connected to the outlet opening (66) and passes through a wall of the housing (24).

## Revendications

1. Dispositif d'alimentation en fluide (40) destiné à une application hydraulique mobile, en particulier à une chaîne cinématique (10) d'un véhicule automobile, ledit dispositif comprenant un carter de fluide (30) dans lequel est reçu un fluide hydraulique (30), un dispositif de filtration de fluide (42) comportant un boîtier de filtre à fluide (60) pourvu d'au moins un orifice d'aspiration (64) et d'au moins un orifice de sortie (66), un filtre à fluide (62) étant disposé sur le boîtier de filtre à fluide (60) entre l'orifice d'aspiration (64) et l'orifice de sortie (66), le carter de fluide (30) définissant un niveau de fluide statique minimal (32), l'orifice d'aspiration (64) étant ménagé au-dessous du niveau de fluide statique minimal (32), le boîtier de filtre à fluide (60) étant conçu et disposé par rapport au carter de fluide (30) de telle sorte que le fluide hydraulique (36) aspiré par l'orifice d'aspiration (64) traverse le filtre à fluide (62) de haut en bas,
**caractérisé en ce que**
une topographie de niveau de fluide dynamique minimale (34) est définie pour le carter de fluide (30), laquelle est déterminée par le point le plus bas de toutes les topographies individuelles dans le sens de la gravitation en raison de différentes accélérations, c'est-à-dire lorsque l'on observe sur toute la surface du carter de fluide (30), le boîtier de filtre à fluide (60) étant conçu et disposé par rapport au carter de fluide (30) de telle sorte que l'orifice d'aspiration (64) et/ou l'orifice de sortie (66) sont ménagés au-dessous de la topographie du niveau de fluide dynamique minimale (34) et le côté supérieur du filtre à fluide (62) qui forme tout ou partie de l'orifice d'aspiration (64) coupant la topographie de niveau de fluide dynamique minimale (34) et le boîtier de filtre à fluide (60) comportant au-dessous du filtre à fluide (62) un blindage (70) qui est disposé de telle sorte que l'orifice de sortie (66) soit ménagé au-dessous de la topographie du niveau de fluide dynamique minimale (34).

2. Dispositif d'alimentation en fluide selon la revendication 1, **caractérisé en ce qu'**au moins une partie de l'orifice d'aspiration (64) est formée par un côté supérieur du filtre à fluide (62).

3. Dispositif d'alimentation en fluide selon l'une des revendications 1 ou 2, **caractérisé en ce que** le filtre à fluide (62) est formé de telle sorte que son côté supérieur est disposé au-dessous de la topographie de niveau de fluide dynamique minimale (34).

4. Dispositif d'alimentation en fluide selon la revendication 1, **caractérisé en ce que** le boîtier de filtre à fluide (60) comporte un côté supérieur dans lequel est ménagé l'orifice d'aspiration (64) et qui est disposé au-dessus du filtre à fluide (62), le côté supérieur du boîtier de filtre à fluide (60) étant formé de telle sorte que l'orifice d'aspiration (64) est ménagé au-dessous de la topographie de niveau de fluide dynamique minimale (34).

5. Dispositif d'alimentation en fluide selon l'une des revendications 1 à 4, **caractérisé en ce qu'**un raccord du boîtier de filtre à fluide (60) est disposé au-dessous du filtre à fluide (62), lequel raccord est relié à l'orifice de sortie (66) et peut être relié à un raccord d'aspiration d'une pompe hydraulique (44).

6. Ensemble transmission/embrayage (14, 16) comprenant un boîtier {24) dans lequel est disposé un dispositif d'alimentation en fluide (40) selon l'une des revendications 1 à 5.

7. Ensemble transmission/embrayage selon la revendication 6, une buse (68) étant formée sur le boîtier de filtre à fluide (60), laquelle est raccordée à l'orifice de sortie (66) et qui traverse une paroi du boîtier (24).
